Europäisches Patentamt

European Patent Office

Office européen des brevets

(19)

(11) **EP 0 801 361 A2**

(12) **EUROPÄISCHE PATENTANMELDUNG**

(43) Veröffentlichungstag:
**15.10.1997 Patentblatt 1997/42**

(51) Int Cl.⁶: **G06T 7/00**

(21) Anmeldenummer: **97200941.9**

(22) Anmeldetag: **01.04.1997**

(84) Benannte Vertragsstaaten:
**DE FR GB NL**

(30) Priorität: **03.04.1996 DE 19613342**

(71) Anmelder:
• **Philips Patentverwaltung GmbH**
**22335 Hamburg (DE)**
Benannte Vertragsstaaten:
**DE**
• **Philips Electronics N.V.**
**5621 BA Eindhoven (NL)**
Benannte Vertragsstaaten:
**FR GB NL**

(72) Erfinder:
• **Buzug, Thorsten, Dr.**
**Röntgenstrasse 24, 22335 Hamburg (DE)**
• **Weese, Jürgen, Dr.**
**Röntgenstrasse 24, 22335 Hamburg (DE)**

(74) Vertreter: **Hartmann, Heinrich, Dipl.-Ing. et al**
**Philips Patentverwaltung GmbH,**
**Röntgenstrasse 24**
**22335 Hamburg (DE)**

(54) **Automatisches Bildauswertungsverfahren**

(57) Die Erfindung bezieht sich auf ein automatisches Bildauswertungsverfahren, bei dem zwei zu unterschiedlichen Zeiten aufgenommene Bilder ausgewertet werden, indem anhand der Verschiebungen von Bildausschnitten eine Transformationsfunktion bestimmt wird, die die Verschiebung von einem Bild zum anderen beschreibt. Um diese Verschiebung genau bestimmen zu können, werden in den beiden Bildern übereinstimmende Bildausschnitte mit Hilfe einer Hystogrammanalyse ermittelt.

Fig.1

**Beschreibung**

Die Erfindung betrifft ein automatisches Bildauswertungsverfahren, bei dem zwei zu unterschiedlichen Zeitpunkten aufgenommene Bilder des gleichen Objektes ausgewertet werden, indem

a) eine Anzahl von Bildausschnitten in einem zu bearbeitenden Bildbereich des einen Bildes vorgegeben wird,
b) jeder dieser Bildausschnitte mit Bildausschnitten verglichen wird, die in dem anderen Bild die gleiche oder eine - innerhalb eines Suchbereiches - demgegenüber versetzte Lage haben wie dieser Bildausschnitt in dem einen Bild,
c) der Bildausschnitt in dem anderen Bild ermittelt wird, der am besten mit dem Bildausschnitt in dem einen Bild übereinstimmt ,
d) die Verschiebung der am besten übereinstimmenden Bildausschnitte ermittelt wird und
e) eine die Verschiebung der einzelnen Bildausschnitte approximierende Transformationsfunktion bestimmt wird.

Außerdem bezieht sich die Erfindung auf eine Anordnung zur Durchführung des Verfahrens.

Ein Anwendungsgebiet ist die medizinische Diagnostik, bei der von einem Patienten zu unterschiedlichen Zeitpunkten Bilder aufgenommen worden sind. Als "Bild" wird im folgenden ein Datensatz bezeichnet, der in den Bildpunkten eines zwei- oder dreidimensionalen räumlichen Bereiches einen physikalischen Parameter charakterisiert, z.B. die Absorption von Röntgenstrahlung (bei Röntgen- oder Röntgen-CT-Bildern) oder die Stärke der Transversalmagnetisierung (bei Magnetresonanz - MR). Die Transformationsfunktion, die die Verschiebung der einzelnen Bildausschnitte approximiert, liefert dabei eine quantitative Aussage über Richtung und Ausmaß der Verformungen in den beiden Bildern. Mit einem derartigen Verfahren lassen sich aus Aufnahmen vor oder nach einer Operation, z.B. einer Hüftgelenksoperation oder einem anderen chirurgischen Eingriff die räumlichen Veränderungen in der Umgebung des Operationsgebietes beurteilen.

Ein bevorzugtes Anwendungsgebiet der Erfindung ist die digitale Subtraktionsangiographie (DSA). Dabei wird vor einer Kontrastmittelinjektion ein erstes Bild (Maskenbild) und nach der Kontrastmittelinjektion ein weiteres Bild (Kontrastbild) aufgenommen. Beide Bilder bilden den gleichen Bereich des Patienten ab. Sie unterscheiden sich dadurch voneinander, daß im Kontrastbild auch die Blutgefäße des Patienten abgebildet werden. Das aus den beiden Bildern abgeleitete Differenzbild zeigt dann im wesentlichen nur noch die Blutgefäße.

Da zwischen der Aufnahme des Kontrastbildes und des Maskenbildes eine gewisse Zeit verstreicht, sind geringfügige Bewegungen des Patienten bzw. Verformung durch die Atmung nicht zu vermeiden. Das Maskenbild und das Kontrastbild bilden daher geringfügig gegeneinander versetzte Bereiche innerhalb des Patienten ab. Dies führt zu Artefakten im Differenzbild, weil der im Maskenbild enthaltende Hintergrund sich nicht vollständig eliminieren läßt; die verbleibenden Hintergrundstrukturen überlagern sich im Differenzbild in störender Weise den Gefäßstrukturen.

Bei einem aus der US-PS 5,048,103 bekannten Verfahren der eingangs genannten Art werden zunächst besondere Punkte ("landmarks") errechnet, die möglichst gleichmäßig über das Bild verteilt sind. Es wird dann jeweils ein Bildausschnitt definiert, in dessen Zentrum sich der "landmark" befindet und im anderen Bild wird innerhalb eines Suchbereiches um den zu dem "landmark" korrespondierenden Bildpunkt herum der Bildausschnitt bestimmt, der am besten mit dem Ausschnitt um den "landmark" übereinstimmt. Die Übereinstimmung wird mittels der Kreuzkorrelation bestimmt, wobei als am besten übereinstimmend diejenigen Bildausschnitte in den beiden Bildern ermittelt werden, für die die Kreuzkorrelation ein Maximum aufweist. Die Kreuzkorrelation führt jedoch zu Fehlern, wenn es keine übereinstimmenden Bildausschnitte gibt, z.B. weil in dem einen Bild der Bildausschnitt die Abbildung eines Gefäßes enthält, während in dem anderen Bild kein solches Gefäß abgebildet ist. Die auf diese Weise ermittelte Verschiebung des Bildausschnitts entspricht daher also nicht der tatsächlichen Verschiebung, so daß auch die daraus abgeleitete Transformationsfunktion die Veränderungen nicht richtig beschreibt. Wenn man daher das eine Bild entsprechend der Transformationsfunktion transformiert und die beiden Bilder voneinander subtrahiert, werden die Artefakte im Differenzbild nicht eliminiert.

Es ist Aufgabe der vorliegenden Erfindung, ein Verfahren der eingangs genannten Art anzugeben, daß auch bei der digitalen Subtraktionsangiographie zutreffende Ergebnisse liefert.

Diese Aufgabe wird erfindungsgemäß dadurch gelöst, daß

f) aus den zu vergleichenden Bildausschnitten der beiden Bilder ein Differenz-Bildausschnitt gebildet wird,
g) ein Histogramm der Bildwerte in dem Differenz-Bildausschnitt erstellt wird,
h) als am besten übereinstimmend jeweils diejenigen Bildausschnitte in den beiden Bilder ermittelt werden, deren zugehöriger Differenz-Bildausschnitt in seinem Histogramm das bzw die schmalsten Häufigkeitsmaxima aufweist.

Um den Grad der Übereinstimmung zwischen zwei Bildausschnitten zu ermitteln, wird also ein Differenzbildausschnitt ermittelt (wobei die Bildwerte des einen Bildausschnitts von den Bildwerten im anderen Bildausschnitt subtrahiert werden, die räumlich korrespondierenden Bildpunkten zugeordnet sind). Von dem Differenzbildausschnitt wird ein Histogramm der Bildwerte erstellt, d.h. es wird die Häufigkeit einzelner Bildwerte ermittelt. Wenn die Bildausschnitte übereinstimmen würden, müßte der Differenzbildausschnitt ein Häufigkeitsmaximum bei dem Bildwert Null bzw. einem konstanten Bildwert aufweisen, wobei bei der digitalen Subtraktionsangiographie ein weiteres Häufigkeitsmaximum auftreten kann, das durch die mit Kontrastmittel gefüllten Gefäße im Kontrastbild hervorgerufen wird. Demgemäß werden diejenigen Bildausschnitte als am besten übereinstimmend ermittelt, deren Differenzbildausschnitt in seinem Histogramm die ausgeprägtesten Häufigkeitsmaxima aufweist.

Es gibt verschiedene Möglichkeiten, die Differenzbildausschnitte mit den ausgeprägtesten Häufigkeitsmaxima zu bestimmen. Beispielsweise könnte für jeden Differenzbildausschnitt das jeweilige Maximum der Häufigkeit ermittelt werden und derjenige Differenzbildausschnitt selektiert werden, der das höchste Häufigkeitsmaximum aufweist. Demgegenüber sieht eine bevorzugte Ausgestaltung der Erfindung vor, daß die durch das Histogramm gegebene Häufigkeitsverteilung durch Beaufschlagung mit einer Bewertungsfunktion in eine bewertete Häufigkeitsverteilung überführt wird, daß das Integral über die bewertete Häufigkeitsverteilung errechnet wird und daß zur Ermittlung des Differenz-Bildausschnittes mit dem bzw den schmalsten Häufigkeitsmaxima derjenige Differenz-Bildausschnitt bestimmt wird, für den dieses Integral einen Extremwert annimmt. Das Integral über die Häufigkeitsverteilung (d.h. die Summe aller Häufigkeitswerte in dem Histogramm) ist definitionsgemäß gleich 1, so daß dieses Integral für sämtliche Bildausschnitte gleich 1 wäre. Beaufschlagt man jedoch die Häufigkeitsverteilung mit einer geeigneten Bewertungsfunktion (indem man jeden Häufigkeitswert durch den von der Bewertungsfunktion gelieferten Wert ersetzt), dann nimmt das Integral bei den am besten übereinstimmenden Bildausschnitten einen Extremwert (Maximum oder Minimum) an.

Dabei ist in weiterer Ausgestaltung der Erfindung vorgesehen, daß die Bewertungsfunktion im Bereich zwischen $p_b=0$ und $p_b=1$ keinen Wendepunkt aufweist, wobei $p_b$ die Häufigkeit des Bildwertes b in dem Differenz-Bildausschnitt ist. Es läßt sich zeigen, daß bei derartigen Bewertungsfunktionen - je nach ihrem Verlauf - das Integral entweder maximal oder minimal wird, wenn die zu dem Differenzbildausschnitt gehörenden Bildausschnitte die beste Übereinstimmung aufweisen.

Eine bevorzugte Ausgestaltung der Erfindung sieht vor, daß als Bewertungsfunktion die Funktion $f(p) = - p_b \log p_b$ herangezogen wird und daß derjenige Bildausschnitt bestimmt wird, für den das Integral ein Minimum ist. Das Integral entspricht dann dem z.B. aus der Informationstheorie bekannten Entropiemaß, das ein Maß für die Information ist. Wenn zwei Bildausschnitte übereinstimmen, enthält der daraus abgeleitete Differenzbildausschnitt im Sinne der Informationstheorie die wenigste Information. Es können aber auch Bewertungsfunktionen benutzt werden, die die Funktion $f(p) = - p_b \log p_b$ approximieren.

Eine andere Ausgestaltung des erfindungsgemäßen Verfahrens sieht seine Anwendung bei der digitalen Subtraktionsangiographie vor,

wobei aus einem Kontrastbild und einem Maskenbild ein Differenzbild abgeleitet wird,
wobei alle Bildpunkte in dem zu bearbeitenden Bildbereich des Kontrast- oder des Maskenbildes einer Transformation entsprechend dieser Transformationsfunktion unterzogen werden,
und wobei das Differenzbild durch Subtraktion aus dem transformierten Maskenbild (Kontrastbild) und dem nicht transformierten Kontrastbild (Maskenbild) abgeleitet wird. Diese Ausgestaltung liefert ein von den eingangs geschilderten Artefakten weitgehend befreites Differenzbild.

In Fortbildung der Erfindung ist weiterhin vorgesehen, daß der zu bearbeitende Bildbereich durch ein vom Benutzer nach Lage und Größe einstellbares Bildfenster vorgebbar ist. Wenn der Benutzer den diagnostisch interessierenden Bereich auf diese Weise vorgibt, muß die Transformation lediglich die Verschiebung innerhalb des Bildfensters beschreiben; sie kann dann einfacher aufgebaut sein als wenn sie die Verschiebung im gesamten Bild beschreiben müßte. Dadurch wird die Rechenzeit wesentlich verringert. Wenn darüberhinaus - wie bei einem DSA-Verfahrensämtliche Bildpunkte in dem zu bearbeitenden Bereich der Transformation entsprechend der Transformationsfunktion unterzogen werden müssen, reduziert sich die Rechenzeit auch dadurch, daß das Bildfenster diese Transformation auf eine geringere Anzahl von Bildpunkten beschränkt.

Wenn die Kontraste innerhalb eines Bildausschnitts gering sind, ist es nur schwer oder gar nicht möglich, die Lage des korrespondierenden Bildausschnittes in dem jeweils anderen Bild genau zu bestimmen. Wenn man solche Bildausschnitte zur Berechnung der Transformationsfunktion heranzieht, können sich aus diesem Grund Fehler ergeben. Diese lassen sich dadurch vermeiden, daß der zu bearbeitende Bildbereich in eine Anzahl von gleichartigen, aneinander grenzenden Bildausschnitten unterteilt wird, daß die Kontraste für die einzelnen Bildausschnitte ermittelt werden, und daß nur diejenigen Bildausschnitte zur Bestimmung der Verschiebung ausgewählt werden, die die größten Kontraste aufweisen. In weiterer Ausgestaltung der Erfindung kann dabei vorgesehen sein, daß die Kontraste für die einzelnen Bildausschnitte aus einem Histogramm der Bildwerte in dem betreffenden Bildausschnitt abgeleitet werden.

Eine Anordnung zur Durchführung des erfindungsgemäßen Verfahrens, die versehen ist mit

- einer bildgebenden Anordnung zur Erzeugung von wenigstens zwei Bildern von einem zu untersuchenden Objekt
- Mitteln zur Vorgabe einer Anzahl von gleichartigen Bildausschnitten in einem zu bearbeitenden Bildbereich des einen Bildes,
- Mitteln zum Vergleich jedes dieser Bildausschnitte mit Bildausschnitten in dem anderen Bild, die die gleiche oder eine - innerhalb eines Suchbereiches demgegenüber versetzte Lage haben wie der Bildauschnitt in dem einen Bild,
- Mitteln zur Bestimmung desjenigen Bildausschnittes in dem anderen Bild, der die beste Übereinstimmung mit dem Bildausschnitt in dem einen Bild aufweist,
- Mitteln zur Bestimmung der Verschiebung der auf diese Weise zueinander korrespondierenden Bildausschnitte und mit
- Mitteln zum Bestimmen einer die Verschiebung der einzelnen Bildausschnitte approximierenden Transformationsfunktion, zeichnet sich dadurch aus, daß
- zum Vergleich von Bildausschnitten der beiden Bilder Mittel vorgesehen sind, die aus je einem Bildausschnitt in den beiden Bildern einen Differenz-Bildausschnitt bilden, sowie Mittel zum Erstellen eines Histogramms der Bildwerte in dem Differenz-Bildausschnitt,
- und daß Mittel zum Bestimmen derjenigen Bildausschnitte in den beiden Bildern vorgesehen sind, deren zugehöriger Differenz-Bildausschnitt in seinem Histogramm das bzw die schmalsten Häufigkeitsmaxima aufweist.

Die Erfindung wird nachfolgend anhand der Zeichnungen näher beschrieben. Es zeigen:

Fig. 1 ein schematisches Blockschaltbild einer DSA-Anordnung, mit der die Erfindung ausführbar ist,

Fig. 2 ein Ablaufdiagramm für das erfindungsgemäße Verfahren,

Fig. 3 ein Maskenbild,

Fig. 4 ein Kontrastbild,

Fig. 5 ein Differenzbild,

Fig. 6a und 6b ein Bildfenster im Maskenbild und im Kontrastbild,

Fig. 7a und 7b Häufigkeitsverteilungen in den verschiedenen Bildausschnitten des Maskenbildes und

Fig. 8a und 8b Häufigkeitsverteilungen von Bildwerten in verschiedenen Differenz-Bildausschnitten.

Fig. 9 ein Ablaufdiagramm für den Block 104 in Fig. 2.

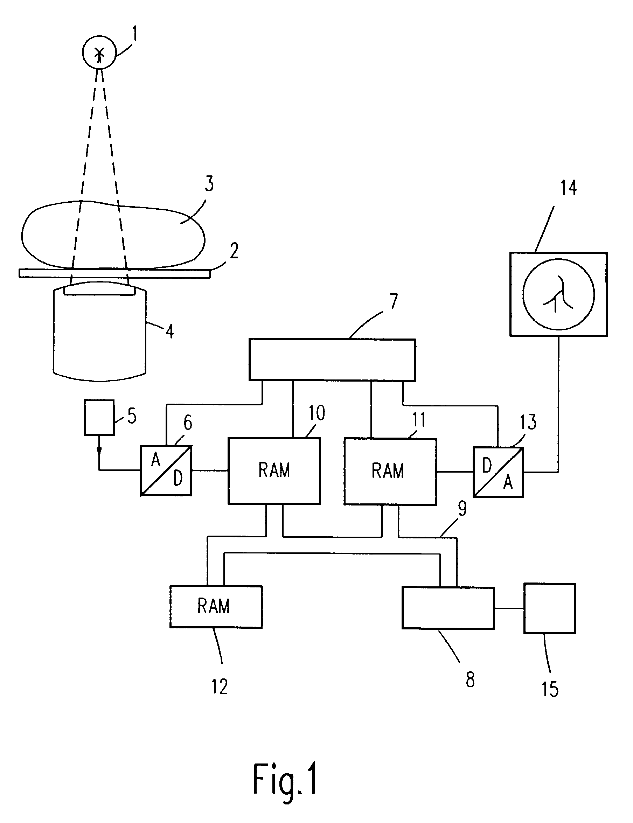

Fig. 1 stellt eine Röntgenanlage dar mit einem Röntgenstrahler 1, der einen auf einer Tischplatte 2 befindlichen Patienten 3 durchstrahlt. Das dadurch erzeugte Röntgenstrahlen-Relief trifft auf den Eingangsbildschirm eines Röntgenbildverstärkers 4 auf, dessen in der Helligkeit verstärktes Ausgangsbild von einer Videokamera 5 aufgenommen wird. Das von der Videokamera gelieferte analoge Videosignal wird von einem Analog-Digitalwandler 6 in eine Folge digitaler Datenworte umgesetzt. Die Datenworte stellen für je einen Bildpunkt den Bildwert dar, d.h. die Helligkeit des Bildes in diesem Bildpunkt. Die Datenworte werden - von einer Videokontrolleinheit 7 gesteuert - in einem Speicher 10 unter aufeinanderfolgenden Adressen gespeichert.

Anstelle der beschriebenen Erfassung der Röntgen-Bildinformation ist auch eine andere Erfassung möglich, z.B durch eine CCD-Kamera oder einen HalbleiterRöntgendetektor.

Der Speicher 10 ist über ein Bussystem 9 an einen Mikrocomputer 8 angeschlossen, der über dieses Bussystem auch Zugriff auf weitere Bildspeicher 11 und 12 hat. Die Bildspeicher 10, 11 und 12 dienen der Speicherung des Kontrastbildes, des Maskenbildes und des Differenzbildes. Mittels der Videokontrolleinheit 7 kann ein Bild, z.B. das Differenzbild, aus dem Speicher 11 ausgelesen und über einen Digital-Analogwandler 13 einer Wiedergabeeinheit (Monitor) 14 zugeführt werden. An den Mikrocomputer 8 ist u.a. eine Eingabeeinheit 15 angeschlossen, mit der der Benutzer die verschiedenen Bilder aufrufen kann oder in den Bildern Bildfenster festlegen kann.

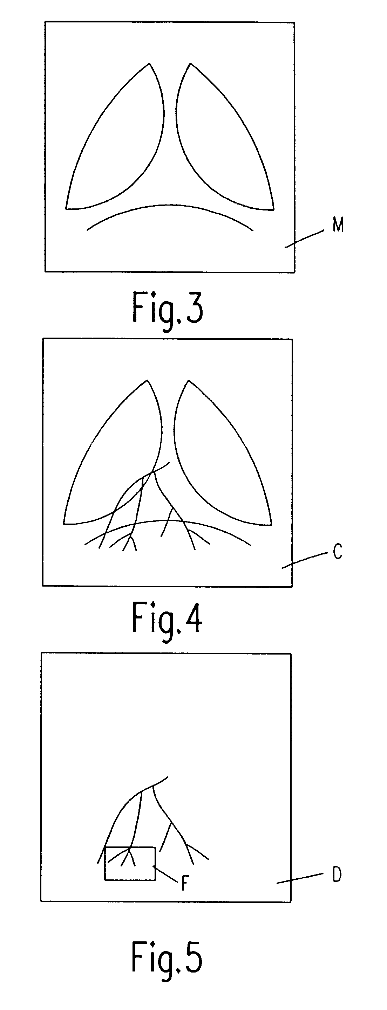

Fig. 3 zeigt schematisch ein bei einer Subtraktionsangiographie erzeugtes Maskenbild M, das im allgemeinen aufgenommen wird, bevor ein Kontrastmittel in die Blutgefäße injiziert wird. Das Maskenbild zeigt die Strukturen, die bei der Angiographie den Bildhintergrund darstellen.

Fig. 4 zeigt ein Kontrastbild C, das aufgenommen wird, wenn sich ein zuvor injiziertes Kontrastmittel im Gefäßsystem des Patienten ausgebreitet hat. Es zeigt außer dem Hintergrund die mit dem Kontrastmittel gefüllten Gefäße.

Fig. 5 zeigt ein aus dem Kontrastbild und dem Maskenbild durch Subtraktion abgeleitetes Differenzbild D, das im wesentlichen nur noch das Gefäßsystem darstellt. Wenn sich der Hintergrund zwischen den Aufnahmen der Bilder M und C verschiebt, erscheinen Teile des Bildhintergrundes als Bildartefakte.

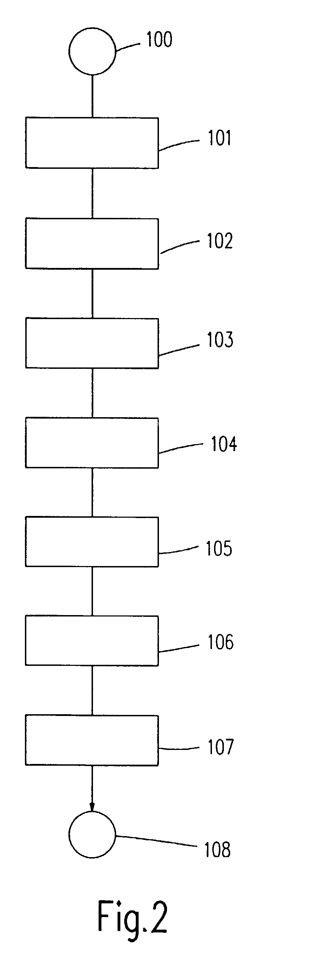

Fig. 2 erläutert das erfindungsgemäße Verfahren, mit dem die im Differenzbild D zunächst auftretenden Artefakte unterdrückt werden können, anhand eines Ablaufdiagramms. Nach diesem Diagramm verarbeitet der Mikrocomputer 8 die beiden Bilder M und C. Nach der Initialisierung (Block 100) sind die in den Fig. 3 bis 5 dargestellten Bilder aufgenommen und gespeichert. Wenn in dem Differenzbild D aufgrund von Verschiebungen zwischen den Aufnahmen des Kontrastbildes und des Maskenbildes Bildartefakte auftreten, gibt der Benutzer mit Hilfe der Eingabeeinheit 15 (Fig. 1) in dem Differenzbild ein nach Lage und Größe einstellbares Fenster F (Fig. 5) vor (Block 101), das die für die Diagnose besonders interessierenden Bildbereiche des Differenzbildes umschließt.

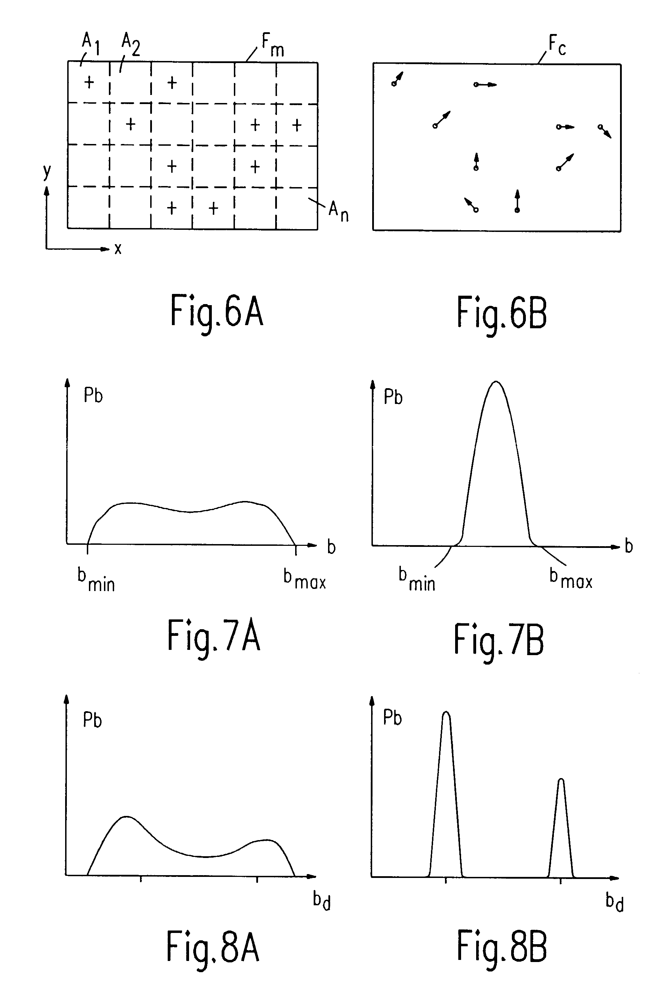

Fig. 6a zeigt ein Fenster $F_m$ im Maskenbild, das hinsichtlich seiner Lage und seiner Größe dem vorgegebenen Fenster im Differenzbild entspricht. Das Fenster $F_m$ in dem Maskenbild wird danach in eine Anzahl von Bildausschnitten $A_1$, $A_2$...$A_n$ unterteilt (Block 102 in Fig. 2). Diese Bildausschnitte sind in Fig. 6a durch gestrichelte Linien dargestellt. Zweckmäßigerweise haben sie die gleiche Größe und Form, vorzugsweise eine quadratische Form. Wenn das Maskenbild jeweils 1000 x 1000 Bildpunkte (pixel) umfaßt, können die quadratischen Bildausschnitte eine Seitenlänge von 40 bis 80 Bildpunkten haben. Wenn die Bildausschnitte wesentlich kleiner gewählt werden, wird es immer schwerer, die Verschiebung der einzelnen Bildausschnitte zu bestimmen. Werden die Bildausschnitte wesentlich größer gewählt, läßt sich die Verformung des Bildfensters $F_m$ nur noch relativ ungenau berechnen. Die Unterteilung des Bildfensters in Bildausschnitte (Block 102) erfolgt automatisch; vorzugsweise wird die Größe des Fensters automatisch so vorgegeben, daß dessen Seitenlängen einem ganzzahligen Vielfachen der Seitenlängen der Bildausschnitte entsprechen.

Im nachfolgenden Schritt (Block 103) werden diejenigen Bildausschnitte des Bildfensters ausgewählt, die den größten Kontrast aufweisen. Dies kann auf einfache Weise mittels eines Entropiemaßes h erfolgen gemäß der Gleichung

$$h = - \sum_{b=b_{min}}^{b=b_{max}} p_b \, \log p_b \qquad\qquad (1)$$

Dabei sind

- b die Bildwerte in den einzelnen Bildpunkten des Bildausschnittes (d.h. die diesen Bildpunkten als digitales Datenwort zugeordneten Helligkeits- bzw. Grauwerte),
- $b_{min}$ der kleinste Bildwert innerhalb des Bildausschnittes,
- $b_{max}$ der größte Bildwert und
- $p_b$ die Häufigkeit des Bildwertes b in dem betreffenden Bildausschnitt.

Für die Häufigkeit $p_b$ gilt bekanntlich

$$\sum_{b=b_{min}}^{b=b_{max}} p_b = 1 \qquad\qquad (2)$$

Fig. 7a und 7b zeigen die Häufigkeit $p_b$ als Funktion des jeweiligen Bildwertes b, und zwar für einen Bildausschnitt mit hohem Kontrast (Fig. 7a) und für einen Bildausschnitt mit niedrigem Bildkontrast (Fig. 7b). In einem Bild mit hohen Bildkontrasten (Fig. 7a) gibt es verhältnismäßig viele helle und viele dunkle Bildpunkte und ebenso Bildpunkte mit dazwischen liegenden Grauwerten. Für einen Bildausschnitt mit einer solchen Häufigkeitsverteilung errechnet sich eine relativ große Entropie h.

Fig. 7b zeigt demgegenüber die Häufigkeit $p_b$ als Funktion des Bildwertes für einen Bildausschnitt mit geringem Kontrast. Der Bildausschnitt hat eine nahezu gleichmäßige Helligkeit, so daß sich die Häufigkeitsverteilung auf einen kleinen Bereich von Bildwerten beschränkt. Hierfür errechnet sich gemäß Gleichung (1) eine niedrige Entropie h. (Bei einem gleichmäßig hellen Bildausschnitt hätte ein einziger Bildwert die Häufigkeit $p_b = 1$, so daß $\log p_b$ und mithin auch die Entropie h Null wäre.)

Nachdem auf diese Weise für jeden Bildausschnitt $A_1$, $A_2$...$A_n$ die Entropie h ermittelt wurde, werden von den Bildausschnitten diejenigen selektiert, die den größten Kontrast haben. Dies kann dadurch geschehen, daß von den Bildausschnitten ein bestimmten Prozentsatz oder eine bestimmte Anzahl ausgewählt wird, die den größten Wert h aufweisen. Es ist aber auch möglich, die Bildausschnitte auszuwählen, deren Entropie oberhalb eines Grenzwertes liegt. In Fig. 6a sind diese Bildausschnitte durch Pluszeichen in ihrem Mittelpunkt gekennzeichnet.

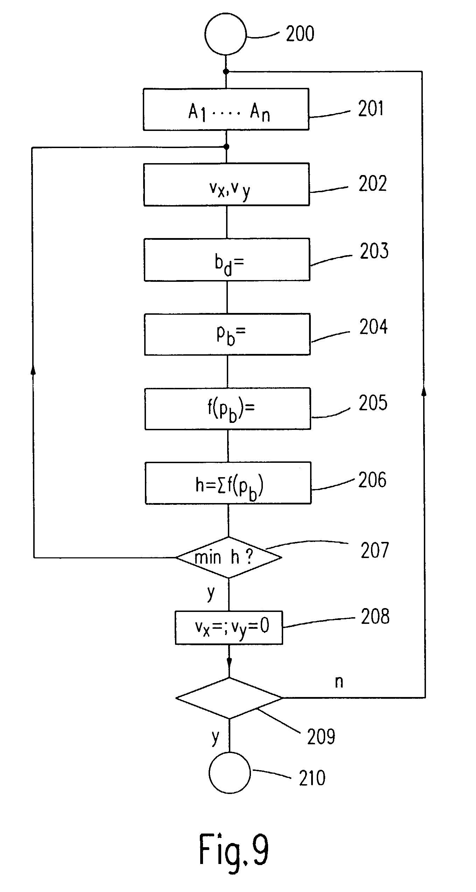

Im Block 104 wird berechnet, um wieviel sich jeder einzelne Bildausschnitt zwischen Masken- und Kontrastbild verschoben hat. Dieser Block umfaßt eine Reihe von Verfahrensschritten, die Fig. 9 in einem Ablaufdiagramm im einzelnen darstellt.

Demgemäß wird im ersten Verfahrensschritt 201 zunächst ein selektierter Bildausschnitt vorgegeben, z.B. $A_1$. Im darauf folgenden Verfahrensschritt 202 wird vorgegeben, um welche Strecke $v_x$, $v_y$ der Bildausschnitt im Kontrastbild in x- bzw y-Richtung gegenüber dem selektierten Bildausschnitt versetzt sein soll. Dabei können $v_x$, $v_y$ Null, negativ oder positiv sein. Wenn $v_x = v_y = 0$ ist, sind die Bildausschnitte im Kontrast- und im Maskenbild, aus denen der Differenzbildausschnitt abgeleitet wird, hinsichtlich ihrer Lage in den beiden Bildern identisch. Die Maximalwerte von $v_x$, $v_y$ ( die z.B. 20 Bildpunkten entsprechen können) bestimmen die Größe des Suchbereiches, innerhalb dessen im Kontrastbild nach einem übereinstimmenden Bildausschnitt gesucht wird.

Danach wird im Schritt 203 der zugehörige Differenzbildausschnitt berechnet, dessen Bildwerte $b_d$ $(x,y)$ sich aus aus den Bildwerten $b_m$ $(x,y)$ des selektierten Bildausschnitts im Maskenbild und den Bildwerten $b_c$ $(x-v_x, y-v_y)$ eines Bildausschnitts im Kontrastbild C errechnen. Für die Bildwerte $b_d$ $(x,y)$ des Differenzbildausschnittes gilt:

$$b_d(x,y) = b_m(x,y) - b_c(x-v_x,y-v_y) \qquad (3)$$

Für diesen Differenzbildausschnitt wird im Verfahrensschritt 204 ein Histogramm der Bildwerte $b_d$ erstellt, d.h., es wird ermittelt, wie häufig die einzelnen Bildwerte in dem Differenzbildausschnitt vorkommen, wobei auch für diese Häufigkeitsverteilung die Gleichung (2) gilt. Fig. 8a und 8b stellen die Häufigkeit $p_b$ als Funktion des Bildwertes $b_d$ für zwei verschiedene Differenzbildausschnitte dar. Fig. 8b zeigt einen Differenzbildausschnitt, der aus im wesentlichen einander entsprechenden Bildausschnitten im Kontrast- und im Maskenbild abgeleitet ist. Man erkennt zwei relative Maxima - ein Maximum, das dem Bildhintergrund zugeordnet ist, und ein Maximum, das den im Bildausschnitt vorhandenen Gefäßen zugeordnet ist. Wenn die Bildausschnitte, aus denen der Differenzbildausschnitt abgeleitet wird, nicht genau zueinander passen, verflachen die Maxima immer mehr, so daß sich der in Fig. 8a dargestellte Häufigkeitsverlauf ergibt. Man erkennt daraus, daß es bei übereinstimmenden Bildausschnitten relativ viele Bildwerte mit der Häufigkeit Null ergibt, aber auch Bildwerte mit einer mittleren oder großen Häufigkeit (Fig. 8b), während es bei nicht übereinstimmenden Bildausschnitten relativ viele Bildwerte mit einer von Null verschiedenen, geringen Häufigkeit gibt.

Um die Differenzbildausschnitte voneinander unterscheiden zu können, werden im nächsten Verfahrensschritt 205 die Häufigkeitswerte des Histogramms mit einer Bewertungsfunktion $f(p_b)$ beaufschlagt (d.h. die Werte $p_b$ werden durch $f(p_b)$ ersetzt), woraus sich eine bewertete Häufigkeitsverteilung ergibt. Eine geeignete Bewertungsfunktion ist gegeben durch $f(p_b) = - p_b \log p_b$.

Diese Bewertungsfunktion hat für die Häufigkeiten 0 und 1 den Wert Null. Das Integral über die dadurch bewertete Häufigkeitsverteilung ist daher bei einer Verteilung gemäß Fig. 8b wesentlich kleiner als bei einer Häufigkeitsverteilung gemäß Fig. 8a. Es können aber auch andere Bewertungsfunktionen verwendet werden, die hohe und niedrige Häufigkeitswerte $p_b$ schwächer (oder stärker) bewerten als die dazwischen liegende Häufigkeitswerte.

Im nächsten Verfahrensschritt 206 wird ein Wert gebildet, der der Fläche unterhalb der durch die bewertete Häufigkeit gegebenen Kurve entspricht, d.h. dem Integral über die bewertete Häufigkeit bzw. der Summe aller bewerteten Häufigkeitswerte. Wenn die oben angegebene Bewertungsfunktion benutzt wird, ergibt sich daraus entsprechend der Gleichung (1) für diese Fläche das Entropiemaß h. Dieses Entropiemaß wird minimal, wenn die Bildausschnitte, aus denen der Differenzbildausschnitt abgeleitet ist, optimal miteinander übereinstimmen.

Im nächsten Schritt 207 wird geprüft, ob ein relatives Minimum für a gefunden worden ist. Ist dies nicht der Fall, dann verzweigt das Programm erneut zum Block 202, wonach die Schritte 202 bis 207 für andere Werte von $v_x$, $v_y$, wiederholt werden. - Wenn bereits für mehrere Differenzbildausschnitte je ein Wert h berechnet worden ist, läßt sich relativ leicht abschätzen, in welcher Richtung die Werte $v_x$ und $v_y$ variiert werden müssen, bis das Entropiemaß h ein Minimum erreicht hat. In dieser Richtung würden dann die Verschiebungen automatisch solange variiert, bis das Minimum für h gefunden ist. Es müssen deshalb nicht alle Bildausschnitte untersucht werden, die in dem Kontrastbild innerhalb des erwähnten Suchbereiches liegen.

Nachdem auf diese Weise derjenige Versatz $v_x$, $v_y$ des Bildausschnitts im Kontrastbild gefunden worden ist, für den das Entropiemaß h des Differenzbildausschnitts ein Minimum aufweist, werden diese Werte $v_x$, $v_y$ als die Verschiebung gespeichert, die der betreffende Bildausschnitt im Zeitraum zwischen der Aufnahme des Maskenbildes und des Kontrastbildes erfahren hat (Block 208). Diese Werte werden einem bestimmten Punkt in dem betreffenden Bildausschnitt, vorzugsweise seinem Mittelpunkt, als Verschiebung zugeordnet.

Im Block 209 wird überprüft, ob alle im Block 103 selektierten Bildausschnitte bearbeitet sind. Ist dies nicht der Fall, verzweigt das Programm zu dem Block 201, wonach die Verfahrensschritte 201 bis 209 für einen anderen selektierten Bildausschnitt wiederholt werden. Wenn sämtliche selektierten Bildausschnitte verarbeitet worden sind, ist das in Block 9 dargestellte Unterprogramm, das die Verfahrensabläufe innerhalb des Blocks 104 darstellt, abgearbeitet.

Fig. 6b zeigt die Verschiebungsvektoren, die auf diese Weise für die selektierten Bildausschnitte gefunden wurden. Man erkennt deutlich, daß die Verschiebungsvektoren für die verschiedenen Bildausschnitte nach Größe und Richtung voneinander abweichen.

Im nächsten Verfahrensschritt (Block 105) wird aus der so gefundenen Verschiebung bzw. aus der Lage, die die Mittelpunkte der selektierten Bildausschnitte im Kontrastbild infolge der Verschiebung einnehmen, eine Transformationsfunktion der Form

$$X = a_0 + a_1 x + a_2 y \qquad (4)$$

$$Y = a_3 + a_4 x + a_5 y \qquad (5)$$

ermittelt. Dabei sind

- x, y die Koordinaten der Mittelpunkte der selektierten Bildausschnitte im Maskenbild,
- X, Y die Koordinaten im Kontrastbild, die diese Mittelpunkte infolge der Verschiebung haben und

$a_0 ... a_5$ Koeffizienten, die mit Hilfe der zuvor für die Mittelpunkte der selektierten Bildausschnitte ermittelten Verschiebungen berechnet werden können.

Da in der Regel für mehr als drei Bildausschnitte die Verschiebung ermittelt wird, stellen die Gleichungen (4) und (5) ein überbestimmtes Gleichungssystem dar, das sich mit Hilfe der Singulärwertzerlegung im Sinne der kleinsten quadratischen Abweichungen lösen läßt. Bezüglich der Einzelheiten dieses Lösungsverfahrens wird auf das Buch von W.H. Press et.al. "Numerical Recipes in C" (Cambridge University Press, Cambridge, 1990) pp. 534-539, verwiesen.

Nachdem auf diese Weise die Parameter der Transformationsfunktion (d.h. die Koeffizienten $a_0 ... a_5$) berechnet worden sind, werden sämtliche Bildpunkte im Bildfenster des Maskenbildes der durch die Gleichungen (4) und (5) definierten affinen geometrischen Transformation unterzogen (Block 106), wonach das Maskenbild abermals vom Kontrastbild subtrahiert wird (Block 107). Danach ist das Verfahren beendet (108).

Das auf diese Weise erzeugte Differenzbild ist im Bereich des Bildfensters F praktisch frei von den angegebenen Bildartefakten. Obwohl die Transformationsfunktion gemäß den Gleichungen (4) und (5) lediglich aufgrund translatorischer Verschiebungen der Bildausschnitte ermittelt wurde, können die Auswirkungen von Verformungen beseitigt werden, die außer auf einer Translation auf einer Rotation, einer Maßstabsänderung und/oder einer Verkippung beruhen. Bei komplizierteren Verformungen kann eine andere Transformationsfunktion, z.B. mit Polynomen höherer Ordnung, verwendet werden.

Bei dem vorstehend beschriebenen Ausführungsbeispiel wurde ermittelt, wie sich die Lage der Mittelpunkt der selektierten Bildausschnitte im Kontrastbild ändert, und daraus wurde' eine Transformationsfunktion bestimmt, der die Bildpunkte innerhalb des Bildfensters im Maskenbild unterzogen wurden. Es ist jedoch auch möglich, das Maskenbild unverändert zu lassen und statt dessen das Bildfenster im Kontrastbild einer inversen Transformation zu unterziehen, wobei sich die Punkte in dem Bildfenster entsprechend der inversen Transformationsfunktion verschieben. Diese Transformationsfunktion beschreibt dann jedoch eine zu den Gleichungen (4) und (5) inverse Transformation.

Die Erfindung wurde vorstehend anhand eines DSA-Verfahrens mit zweidimensionalen Bildern erläutert. Sie ist aber auch auf dreidimensionale Bilder anwendbar, die durch eine Computertomographie oder durch ein MR-Verfahren erzeugt worden sein können; in diesem Fall sind auch die zu vergeleichenden Bildausschnitte dreidimensional. Ebenso ist die Erfindung nicht auf die digitale Subtraktionsangiographie beschränkt; auch bei Verfahren, bei denen man nach einem chirurgischen Eingriff Veränderungen im Operationsbereich erkennen will, ist die Erfindung anwendbar. Da in diesem Fall zwischen den Aufnahmen der beiden Bilder ein längerer Zeitraum verstreicht, ist es sinnvoll, auf geeignete Weise, beispielsweise mit implantierten Markern, sicherzustellen, daß beide Bilder denselben Bereich des Patienten abbilden. In diesen Anwendungsfällen ist es auch nicht erforderlich, aus den beiden Bildern ein Differenzbild abzuleiten, sondern es genügt, wenn mit Hilfe der Transformationsfunktion das Ausmaß der Veränderungen darstellbar ist. In Sonderfällen kann es genügen, für einzelne in dem einen Bild vorgebbare Bildpunkte, deren Lage in dem anderen Bild mit Hilfe der Transformationsfunktion anzugeben und darzustellen.

**Patentansprüche**

1. Automatisches Bild-Auswertungsverfahren, bei dem zwei zu unterschiedlichen Zeitpunkten aufgenommene Bilder des gleichen Objektes ausgewertet werden, indem

   a) eine Anzahl von Bildausschnitten ($A_1$, $A_2$.....$A_n$) in einem zu bearbeitenden Bildbereich (F) des einen Bildes vorgegeben wird,
   b) jeder dieser Bildausschnitte mit Bildausschnitten verglichen wird, die in dem anderen Bild die gleiche oder eine - innerhalb eines Suchbereiches - demgegenüber versetzte Lage haben wie dieser Bildauschnitt in dem einen Bild,
   c) der Bildausschnitt in dem anderen Bild ermittelt wird, der am besten mit dem Bildausschnitt in dem einen Bild übereinstimmt ,
   d) die Verschiebung ($v_x$, $v_y$) der am besten übereinstimmenden Bildausschnitte ermittelt wird und
   e) eine die Verschiebung ($v_x$, $v_y$) der einzelnen Bildausschnitte approximierende Transformationsfunktion (X, Y) bestimmt wird,
   <u>dadurch gekennzeichnet,</u> daß
   f) aus den zu vergleichenden Bildausschnitten der beiden Bilder ein Differenz-Bildausschnitt gebildet wird,
   g) ein Histogramm der Bildwerte (b) in dem Differenz-Bildausschnitt erstellt wird,
   h) als am besten übereinstimmend jeweils diejenigen Bildausschnitte in den beiden Bilder ermittelt werden, deren zugehöriger Differenz-Bildausschnitt in seinem Histogramm das bzw die schmalsten Häufigkeitsmaxima aufweist.

2. Automatisches Bild-Auswertungsverfahren nach Anspruch 1,
   <u>dadurch gekennzeichnet,</u> daß die durch das Histogramm gegebene Häufigkeitsverteilung (p(b)) durch Beaufschlagung mit einer Bewertungsfunktion (f(p)) in eine bewertete Häufigkeitsverteilung überführt wird, daß das Integral über die bewertete Häufigkeitsverteilung errechnet wird und daß zur Ermittlung des Differenz-Bildausschnittes mit dem bzw den schmalsten Häufigkeitsmaxima derjenige Differenz-Bildausschnitt bestimmt wird, für den dieses Integral einen Extremwert annimmt.

3. Automatisches Bild-Auswertungsverfahren nach Anspruch 2,
   <u>dadurch gekennzeichnet</u>, daß die Bewertungsfunktion (f(p)) im Bereich zwischen $p_b=0$ und $p_b=1$ keinen Wendepunkt aufweist, wobei $p_b$ die Häufigkeit des Bildwertes b in dem Differenz-Bildausschnitt ($b_d(x,y)$) ist.

4. Automatisches Bild-Auswertungsverfahren nach Anspruch 3,
   <u>dadurch gekennzeichnet</u>, daß als Bewertungsfunktion die Funktion $f(p) = - p_b \log p_b$ herangezogen wird und daß derjenige Bildausschnitt bestimmt wird, für den das Integral (h) ein Minimium ist.

5. Automatisches Bild-Auswertungsverfahren nach Anspruch 1,
   <u>gekennzeichnet durch</u> seine Anwendung bei der digitalen Subtraktionsangiographie, wobei aus einem Kontrastbild (C) und einem Maskenbild (M) ein Differenzbild (D) abgeleitet wird,
   wobei alle Bildpunkte (x,y) in dem zu bearbeitenden Bildbereich (F) des Kontrastoder des Maskenbildes (C oder M) einer Transformation entsprechend dieser Transformationsfunktion unterzogen werden,
   und wobei das Differenzbild (D) durch Subtraktion aus dem transformierten Maskenbild (Kontrastbild) und dem nicht transformierten Kontrastbild (Maskenbild) abgeleitet wird.

6. Automatisches Bild-Auswertungsverfahren nach Anspruch 1,
   <u>dadurch gekennzeichnet,</u> daß der zu bearbeitender Bildbereich durch ein vom Benutzer nach Lage und Größe einstellbares Bildfenster (F) vorgebbar ist.

7. Automatisches Bild-Auswertungsverfahren nach Anspruch 1,
   <u>dadurch gekennzeichnet,</u> daß der zu bearbeitende Bildbereich (F) in eine Anzahl von gleichartigen, aneinander grenzenden Bildausschnitten ($A_1$, $A_2$.....$A_n$) unterteilt wird, daß die Kontraste für die einzelnen Bildausschnitte ($A_1$, $A_2$.....$A_n$) ermittelt werden, und daß nur diejenigen Bildausschnitte zur Bestimmung der Verschiebung ($v_x$, $v_y$) ausgewählt werden, die die größten Kontraste aufweisen.

8. Automatisches Bild-Auswertungsverfahren nach Anspruch 7,
   <u>dadurch gekennzeichnet,</u> daß die Kontraste für die einzelnen Bildausschnitte ($A_1$, $A_2$.....$A_n$) aus einem Histogramm der Bildwerte in dem betreffenden Bildausschnitt abgeleitet werden.

9. Anordnung zur Durchführung des Verfahrens nach Anspruch 1, mit

- einer bildgebenden Anordnung (1..5) zur Erzeugung von wenigstens zwei Bildern von einem zu untersuchenden Objekt
- Mitteln (102) zur Vorgabe einer Anzahl von gleichartigen Bildausschnitten ($A_1$, $A_2$.....$A_n$) in einem zu bearbeitenden Bildbereich (F) des einen Bildes (M),
- Mitteln (104) zum Vergleich jedes dieser Bildausschnitte ($A_1$, $A_2$.....$A_n$) mit Bildausschnitten in dem anderen Bild (C), die die gleiche oder eine - innerhalb eines Suchbereiches - demgegenüber versetzte Lage haben wie der Bildauschnitt in dem einen Bild,
- Mitteln (104) zur Bestimmung desjenigen Bildausschnittes in dem anderen Bild (C), der die beste Übereinstimmung mit dem Bildausschnitt in dem einen Bild (M) aufweist,
- Mitteln (104) zur Bestimmung der Verschiebung ($v_x$, $v_y$) der auf diese Weise zueinander korrespondierenden Bildausschnitte und mit
- Mitteln (105) zum Bestimmen einer die Verschiebung ($v_x$, $v_y$) der einzelnen Bildausschnitte approximierenden Transformationsfunktion (X, Y) ,

dadurch gekennzeichnet, daß

- zum Vergleich von Bildausschnitten der beiden Bilder Mittel (203) vorgesehen sind, die aus je einem Bildausschnitt in den beiden Bildern (C,M) einen Differenz-Bildausschnitt bilden, sowie Mittel (204) zum Erstellen eines Histogramms der Bildwerte ($b_d$) in dem Differenz-Bildausschnitt,
- und daß Mittel (205....207) zum Bestimmen derjenigen Bildausschnitte in den beiden Bildern vorgesehen sind, deren zugehöriger Differenz-Bildausschnitt in seinem Histogramm das bzw die schmalsten Häufigkeitsmaxima aufweist.

Fig.1

Fig.2

Fig.3

Fig.4

Fig.5

Fig.6A

Fig.6B

Fig.7A

Fig.7B

Fig.8A

Fig.8B

Fig.9